# EUROPEAN PATENT APPLICATION

(11) **EP 2 264 480 A1**
(43) Date of publication of application: **22.12.2010**
(21) Application number: 09275046.2
(22) Date of filing: 19.06.2009
(51) Int. Cl.: G01S 7/40, G01S 13/72

(54) **Performance evaluation**

(71) Applicant: BAE Systems PLC, 6 Carlton Gardens London SW1Y 5AD (GB)
(72) Inventor: Simpson Richard, Edward, South Gloucestershire BS99 7AR (GB); Revell James, Duncan, South Gloucestershire BS99 7AR (GB)
(74) Representative: BAE SYSTEMS plc Group IP Department

(57) **Abstract**

A method and apparatus for evaluating the performance of an algorithm, the algorithm being one of a filtering algorithm, an estimation algorithm, and a filtering and estimation algorithm; the method comprising: performing the algorithm over a time-period (t₁ - t₇) to provide an algorithm output (3, 5); determining, for a plurality of performance metrics, a value of the respective performance metric (104, 204, 304, 404) for the algorithm output; determining, for each respective performance metric, a respective performance level (100, 200, 300, 400) wherein the respective performance level (100, 200, 300, 400) is a relative level indicative of the performance of the algorithm as a function of time as assessed by the respective performance metric; and evaluating the performance of the algorithm by comparing the respective performance levels (100, 200, 300, 400) for the respective performance metrics in relation to common timings within the time period (t₁ - t₇).

## Description

### FIELD OF THE INVENTION

The present invention relates to methods and apparatus for evaluating the performance an algorithm, where the algorithm is one of a filtering algorithm, an estimation algorithm, and a filtering and estimation algorithm. The present invention also relates to methods and apparatus for selecting such an algorithm, methods and apparatus for performing a process that has a plurality of such algorithms available for implementing the process, and related matters.

### BACKGROUND

The field of signal filtering and the field of variable estimation are known. Filtering algorithms that use a filter to remove or reduce unwanted components of a signal, for example noise, are known. Estimation algorithms that estimate a value of a variable are known. Filtering and estimation algorithms that both use a filter and estimate the value of a variable are known.

Such algorithms are used for various different filtering and/or estimation applications. For example, it is known to use a filtering and estimation algorithm as a tracking algorithm in a target tracking application. A Kalman filter, which is an example of a filtering and estimation algorithm, can be used to provide continuously updated information about a position and a velocity of a target given only a sequence of noisy observations about the position of the target. A Kalman filter is a recursive filter that estimates the state of a linear dynamic system from a series of noisy measurements.

Current methods of evaluating the performance of filtering and estimation algorithms adopt the monitoring of a single performance metric for the algorithm being evaluated. Some current methods utilise a small number of performance metrics in an uncoordinated and/or non-integrated fashion to monitor algorithm performance. Such methods, however, tend to be incapable of isolating and identifying unexpected errors or events and/or their causes.

### SUMMARY OF THE INVENTION

The present inventors have realised it would be desirable to provide a method and apparatus for evaluating the performance of one or more filtering and estimation algorithms that provide more insight and information than is available from conventional use of a single performance metric, or plurality of uncoordinated performance metrics.

The present inventors have further realised it would be desirable to provide a method and apparatus for evaluating the performance of one or more filtering and estimation algorithms that provide an interrelationship between different evaluation metrics being assessed simultaneously.

The present inventors have further realised it would be desirable to provide a method and apparatus for evaluating the performance of one or more filtering and estimation algorithms that tends to provide an identification of unexpected errors and/or events.

In a first aspect the present invention provides a method of evaluating the performance of an algorithm, the algorithm being one of a filtering algorithm, an estimation algorithm, and a filtering and estimation algorithm; the method comprising: performing the algorithm over a time-period to provide an algorithm output as a function of the time within the time period; determining, for a plurality of performance metrics, a value of the respective performance metric for the algorithm output as a function of the time within the time period; determining, for each respective performance metric, a respective performance level as a function of the time within the time period wherein the respective performance level is a relative level indicative of the performance of the algorithm as a function of the time within the time period as assessed by the respective performance metric; and evaluating the performance of the algorithm by comparing the respective performance levels for the respective performance metrics in relation to common timings within the time period.

Evaluating the performance of the algorithm may further comprise detecting any performance characteristics that are indicated by a plurality of the performance metrics in relation to common timing within the time period.

The algorithm may perform one of the following: (i) tracking; (ii) simultaneous localisation and mapping.

One or more of the plurality of performance metrics may be selected from the following performance metrics: a normalised innovation squared performance metric, a time-averaged normalised innovation squared performance metric, a filter efficiency check performance metric, a time-averaged normalised innovation autocorrelation performance metric, a nominal filter performance, a normalised estimation error squared performance metric, a Cramér-Rao lower bound, a goodness-of-fit test, a time-averaged goodness-of-fit test, a filter numerical stability performance metric, and a covariance conditioning performance metric.

The method may further comprise performing a diagnostic process using the determined respective performance levels to determine the causes of any performance characteristics that are indicated by a plurality of the performance metrics.

In a further aspect the present invention provides a method of selecting an algorithm, the method comprising: evaluating the respective performances of a plurality of algorithms in accordance with a method according to any of the above aspects; and selecting the algorithm with the best evaluated performance.

In a further aspect the present invention provides a method of performing a process that has a plurality of algorithms available for implementing the process, the method comprising: selecting an algorithm according to the above aspect; and implementing the process by using the algorithm output of the selected algorithm.

In a further aspect the present invention provides a computer program or plurality of computer programs arranged such that when executed by a computer system it/they cause the computer system to operate in accordance with a method according to any of the above aspects.

In a further aspect the present invention provides a machine readable storage medium storing a computer program or at least one of the plurality of computer programs according to the above aspect.

In a further aspect the present invention provides apparatus for evaluating the performance of an algorithm, the algorithm being one of a filtering algorithm, an estimation algorithm, and a filtering and estimation algorithm; the apparatus comprising one or more processors adapted to: perform the algorithm over a time-period to provide an algorithm output as a function of the time within the time period; determine, for a plurality of performance metrics, a value of the respective performance metric for the algorithm output as a function of the time within the time period; determine, for each respective performance metric, a respective performance level as a function of the time within the time period wherein the respective performance level is a relative level indicative of the performance of the algorithm as a function of the time within the time period as assessed by the respective performance metric; and evaluate the performance of the algorithm by comparing the respective performance levels for the respective performance metrics in relation to common timings within the time period.

The one or more processors may be further adapted to detect any performance characteristics that are indicated by a plurality of the performance metrics in relation to common timing within the time period.

The algorithm may perform one of the following: (i) tracking; (ii) simultaneous localisation and mapping.

Each of the plurality of performance metrics may be selected from the following performance metrics: a normalised innovation squared performance metric, a time-averaged normalised innovation squared performance metric, a filter efficiency check performance metric, a time-averaged normalised innovation autocorrelation performance metric, a nominal filter performance, a normalised estimation error squared performance metric, a Cramér-Rao lower bound, a goodness-of-fit test, a time-averaged goodness-of-fit test, a filter numerical stability performance metric, and a covariance conditioning performance metric.

The one or more processors may be further adapted to perform a diagnostic process using the determined respective performance levels to determine the causes of any performance characteristics that are indicated by a plurality of the performance metrics.

In a further aspect the present invention provides apparatus for selecting an algorithm, the apparatus comprising: the apparatus for evaluating the performance of an algorithm in accordance with apparatus according to any of the above aspects arranged to evaluate the respective performances of a plurality algorithms; wherein the one or more processors are further adapted to select the algorithm with the best evaluated performance.

### BRIEF DESCRIPTION OF THE DRAWINGS

Figure 1 a schematic illustration of an aircraft being tracked by an aircraft tracking device over a period of time;
Figure 2 is a schematic illustration showing estimated respective positions of the aircraft and estimated aircraft directions;
Figure 3 is a process flow chart showing certain steps of an embodiment of an aircraft tracking evaluation process;
Figure 4A is an x-y graph showing a graphical representation of the time-averaged normalised innovation squared (TA NIS) performance metric for each of the time-steps;
Figure 4B is an x-y graph showing a graphical representation of the normalised innovation squared (NIS) performance metric for each of the time-steps;
Figure 4C is an x-y graph showing a graphical representation of the filter efficiency check (FEC) performance metric for each of the time-steps;
Figure 4D is an x-y graph showing a graphical representation of the time-averaged normalised innovation autocorrelation (IA) performance metric for each of the time-steps;
Figure 5 is an x-y graph showing a graphical representation of the timing information determined for each of the four performance metrics measured by the metric processor;
Figure 6 is a schematic illustration of the aircraft being tracked by an aircraft tracking device over a period of time together with a sensor malfunction indication;
Figure 7 is a schematic illustration showing further estimated respective positions of the aircraft and further estimated aircraft directions;
Figure 8A is an x-y graph showing a further graphical representation of the time-averaged normalised innovation squared (TA NIS) performance metric for each of the time-steps;
Figure 8B is an x-y graph showing a further graphical representation of the normalised innovation squared (NIS) performance metric for each of the time-steps;
Figure 8C is an x-y graph showing a further graphical representation of the filter efficiency check (FEC) performance metric for each of the time-steps;
Figure 8D is an x-y graph showing a further graphical representation of the time-averaged normalised innovation autocorrelation (IA) performance metric for each of the time-steps; and
Figure 9 is an x-y graph showing a further graphical representation of the timing information determined for each of the four performance metrics measured by the metric processor;

### DETAILED DESCRIPTION

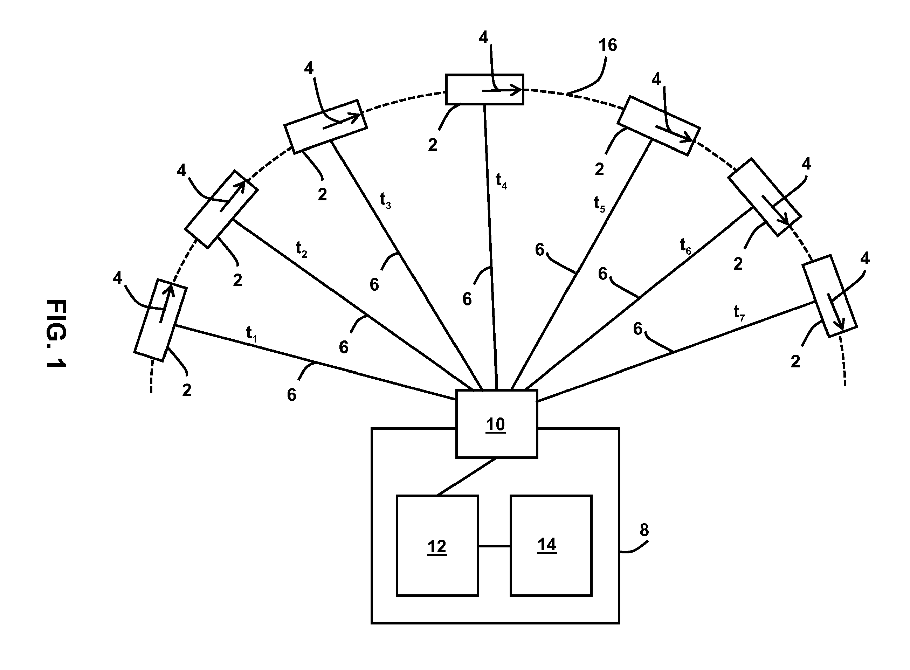

Figure 1 is a schematic illustration of an aircraft 2 being tracked by an aircraft tracking device 8 over a period of time. The path of the aircraft during the period of time, hereinafter referred to as the "true aircraft path 16", is depicted schematically in Figure 1 as a dotted line. The positions of the aircraft 2 along the true aircraft path 16 at a series of seven time-steps are also shown schematically in Figure 1. The first time-step is identified by the reference character t₁. The second time-step is identified by the reference character t₂. The third time-step is identified by the reference character t₃. The fourth time-step is identified by the reference character t₄. The fifth time-step is identified by the reference character t₅. The sixth time-step is identified by the reference character t₆. The seventh time-step is identified by the reference character t₇. At each of the time-steps t₁ - t₇, the respective direction in which the aircraft 2 is travelling, hereinafter referred to as the "true aircraft direction 4", is depicted as an arrow inside a respective schematic of the aircraft 2 at the respective position.

The aircraft tracking device 8 comprises a sensor 10, a position processor 12 and a metric processor 14.

The sensor 10 is a radar transceiver. The sensor 10 emits microwaves which reflect off the aircraft 2 and are received by the sensor 10. In this conventional way, the sensor 10 takes measurements of the position of the aircraft and the true aircraft direction 4. The sensor takes measurements of the position of the aircraft 2 and the true aircraft direction 4 at each of the seven time-steps t₁ - t₇. The microwaves that are reflected from the aircraft 2 and received by the sensor 10, hereinafter referred to as the "sensor observation 6", are schematically represented in Figure 1 by solid lines. In this embodiment, the sensor measurements 6 taken of the aircraft 2 at each of the time-steps are noisy measurements, i.e. the sensor measurements 6 taken of the aircraft 2 are subject to noise. Thus, data corresponding to the sensor observation 6 taken at each of the time-steps contains a number of errors (due to the random noise). In this embodiment, the noise that the sensor readings 6 are subject to is stochastic noise. Thus, the noise present in the data corresponding to the sensor observation 6 taken at each of the time-steps are of random number, spread and severity. The source of this noise can be, for example, from thermal vibration of atoms, an imperfect sensor, or background radiation from space.

The sensor 10 is coupled to the position processor 12. The sensor 10 transmits respective data corresponding to the respective sensor observations 6 taken at the respective time-steps t₁ - t₇ to the position processor 12.

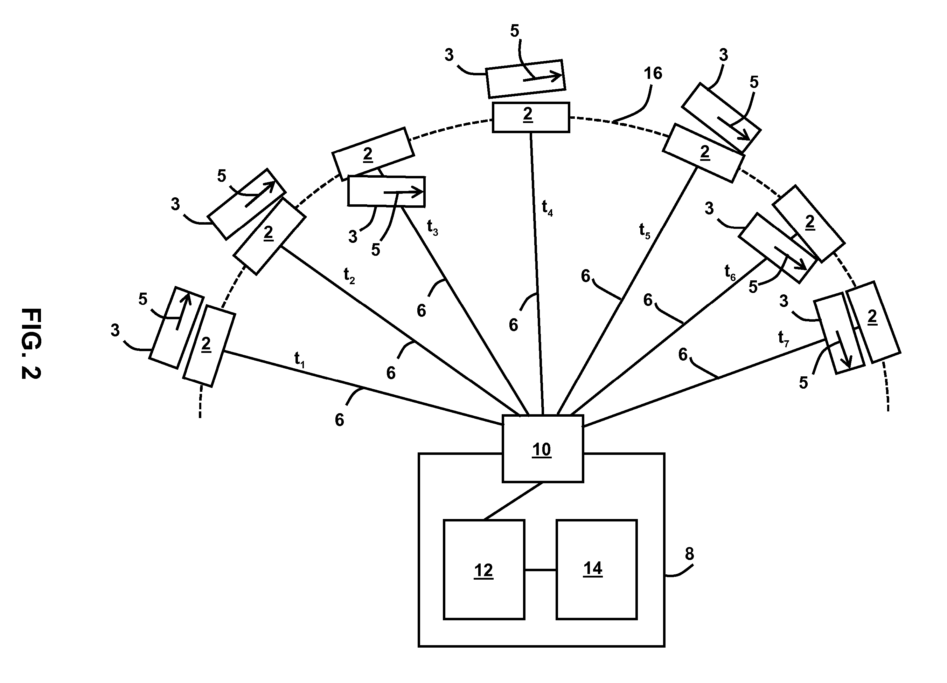

In this embodiment the position processor 12 implements a Kalman filter. The position processor 12 receives the respective data corresponding to the respective sensor observations 6 taken at the respective time-steps t₁ - t₇ from the sensor 10. The position processor 12 determines and outputs an estimated position of the aircraft 2 and an estimated aircraft direction for each of the time-steps t₁ - t₇ for use by the metric processor 14 and for display to a user (not shown). The position processor 12 is coupled to the metric processor 14. The function of the position processor 12 and the processes carried out by the position processor 12 will be described in greater detail later below with reference to Figures 2 to 5.

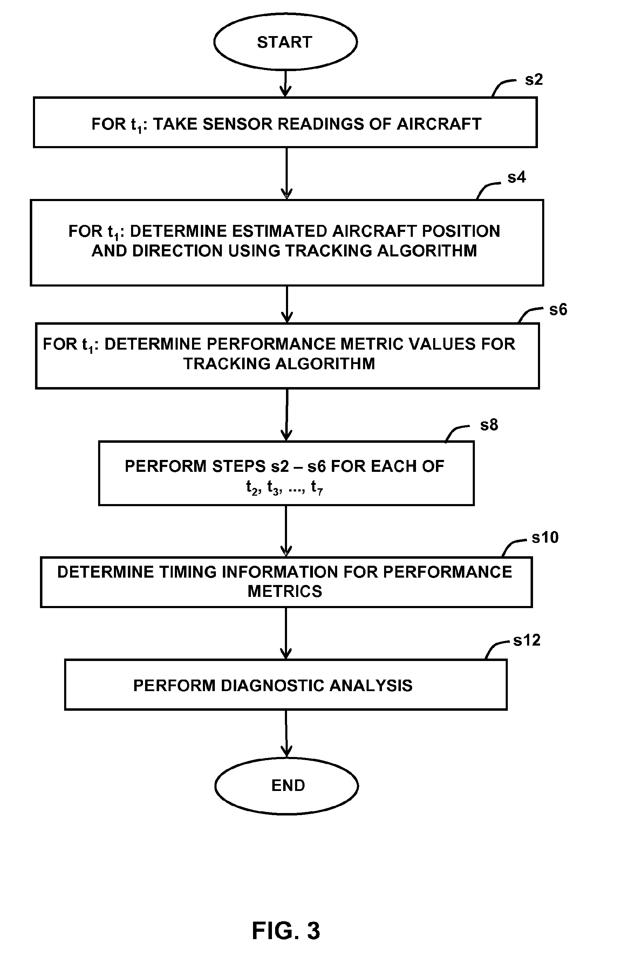

The metric processor 14 is coupled to the position processor 12. The metric processor 14 and the functions and processes performed by the metric processor 14 will be described in greater detail later below with reference to Figures 3 to 5.

Figure 2 is a schematic illustration showing, in addition to the elements on Figure 1 and for each of the respective time-steps t₁ - t₇, an estimated respective position of the aircraft 2, hereinafter referred to as the "estimated aircraft position 3", and an estimated direction in which the aircraft is travelling, hereinafter referred to as the "estimated aircraft direction 5". The estimated aircraft positions 3 and the estimated aircraft directions 5 are determined by the position processor 12 during an aircraft tracking evaluation process, which is described in greater detail later below with reference to Figure 3. For ease of comparison with Figure 1, the estimated respective aircraft positions 3 and the estimated respective aircraft directions 5 for the respective time-steps t₁ - t₇ are shown relative to the true aircraft positions, the true aircraft path 16, and the aircraft tracking device 8 as shown in Figure 1. Figure 2 shows that, over the time-steps t₁ - t₇, the estimated aircraft position and the estimated aircraft direction 5 that are determined by the position processor 12, as described below with reference to Figure 3, deviate from the true aircraft path 16. The deviation of the estimated aircraft position 3 and the estimated aircraft direction 5 from the true aircraft positions and directions are due to the noise present in the data corresponding to the sensor measurements 6 of the aircraft 2. This deviation between estimated and actual aircraft position/direction is shown in Figure 2 as being quite significant. However, the deviations depicted in Figure 2 are for illustrative purposes only. In reality, there would tend to be little significant deviation between the estimated and actual position of the aircraft 2 because the position processor 12 operates to reduce the noise in the system.

Apparatus, including the aircraft tracking device 8, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 3 is a process flow chart showing certain steps of an embodiment of an aircraft tracking evaluation process. The aircraft tracking evaluation process makes novel use of the metric processor's implementation of a process of concurrently monitoring a set of performance metrics in a coordinated manner.

At step s2, for the first time-step t₁, the sensor 10 takes measurements of the position of the aircraft 2 and the true aircraft direction 4. The sensor 10 transmits data corresponding to the sensor observation 6 taken at the first time-step t₁ to the position processor 12. In this embodiment, the sensor measurement 6 taken of the aircraft 2 at the first time-step t₁ is a noisy measurement. Thus, the data corresponding to the sensor observation 6 taken at t₁ contains noise. The position processor 12 receives the data corresponding to the sensor observation 6 taken at t₁ from the sensor 10.

At step s4, the position processor 12 uses the data corresponding to the sensor observation 6, taken at t₁, to determine the estimated aircraft position 3 and the estimated aircraft direction 5 for the first time-step t₁. The estimated aircraft position 3 and the estimated aircraft direction 5 are determined by the position processor 12 using a tracking algorithm, which in this embodiment is a Kalman Filter. The position processor 12 outputs the estimated aircraft position 3 and the estimated aircraft direction 5 for the first time-step t₁ for display to the user. The position processor 12 outputs the estimated aircraft position 3 and the estimated aircraft direction 5 for the first time-step t₁ for use by the metric processor 14.

At step s6, the metric processor 14 determines values of a number of performance metrics for the tracking algorithm used at step s4 by the position processor 12. In this embodiment, the metric processor 14 concurrently determines the values of the performance metrics. In this embodiment, the metric processor 14 concurrently determines the values of the following four performance metrics: the normalised innovation squared (NIS) performance metric, the time-averaged normalised innovation squared (TA NIS) performance metric, the filter efficiency check (FEC) performance metric, and the time-averaged normalised innovation autocorrelation (IA) performance metric. However, in other embodiments, the metric processor concurrently determines values of other combinations of performance metrics, for example any or all of the following performance metrics: the normalised innovation squared (NIS) performance metric, the time-averaged normalised innovation squared (TA NIS) performance metric, the filter efficiency check (FEC) performance metric, the time-averaged normalised innovation autocorrelation (IA) performance metric, the nominal filter performance (NFP) performance metric, the normalised estimation error squared (NEES) performance metric, the Cramér-Rao lower bound (CRLB), the goodness-of-fit test (GFT), the time-averaged goodness-of-fit test (TA GFT), the filter numerical stability (FNS) performance metric, and the covariance conditioning (CC) performance metric. The performance metrics listed above will be described in greater detail in the annex.

At step s8, the steps s2 to s6 of the aircraft tracking evaluation processes are re-iterated for each of the time-steps t₂ - t₇. In this embodiment, the sensor measurements 6 taken of the aircraft 2 each of the time-steps t₂ - t₇ are noisy measurements. Thus, the respective data corresponding to the respective sensor observations 6 taken at each of the respective time-steps t₂ - t₇ contains respective noise. The position processor 12 determines the respective estimated aircraft positions 3 and the respective estimated aircraft directions 5 for each of the respective time-steps t₂ - t₇ using the tracking algorithm. In this embodiment, the tracking algorithm is used to determine the estimated aircraft position 3 and the estimated aircraft direction 5 for a time-step using data corresponding to the sensor observation 6 taken at that time-step, and an aircraft position 3 and an estimated aircraft direction 5 for the previous time-step.

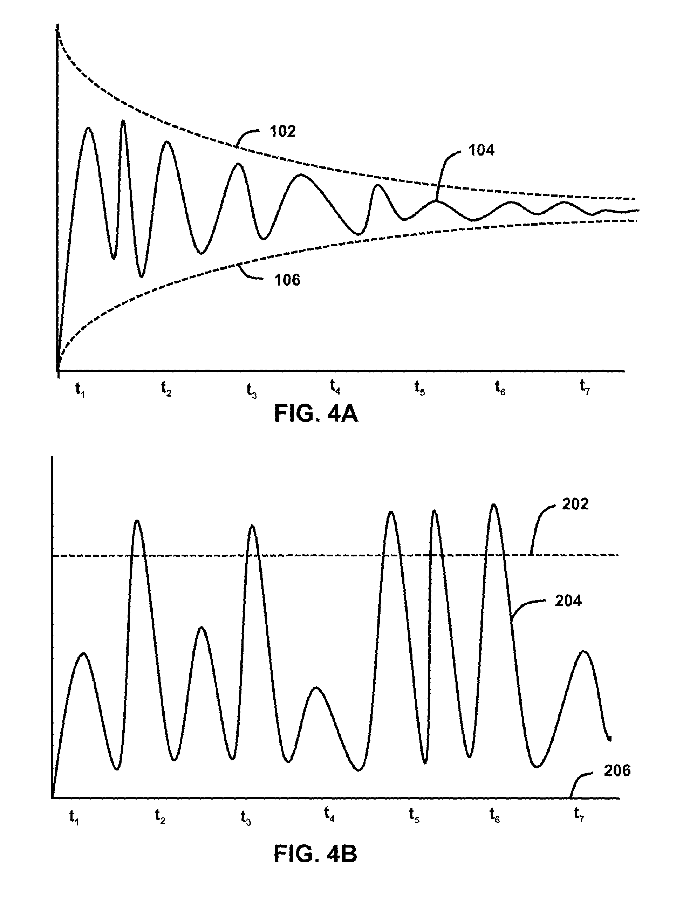

Figures 4A to 4D illustrate the iterations of step s6 of the aircraft tracking evaluation process, as described above with reference to Figure 2. Steps s10 and s12 of the process of Figure 2 described above will be described after the discussion of Figures 4A to 4D.

Figure 4A is an x-y graph showing a graphical representation of the time-averaged normalised innovation squared (TA NIS) performance metric for the time-steps t₁ - t₇, for this example. The determined values of the TA NIS performance metric for this example will hereinafter be referred to as the "first TA NIS performance metric values 104". In this embodiment, the first TA NIS performance metric values 104 are determined by the metric processor 14 during the step s6 of each of the iterations of steps s2 to s6 of the aircraft tracking evaluation process, as described above with reference to Figure 3. Also shown in Figure 4A is an upper confidence bound for the TA NIS performance metric 102, and a lower confidence bound for the TA NIS performance metric 106. In this embodiment, the confidence bounds for the TA NIS performance metric 102, 106 are conventional statistically calculated confidence bounds for the TA NIS performance metric. The x-axis of Figure 4A is the time-step at which the metric processor 14 determines values of the TA NIS performance metric. The x-axis of Figure 4A ranges from the first time-step t₁ to the seventh time-step t₇. The y-axis of Figure 4A is the respective value of the TA NIS performance metric determined by the metric processor 14 at a respective time-step.

Figure 4B is an x-y graph showing a graphical representation of the normalised innovation squared (NIS) performance metric for the time-steps t₁ - t₇, for this example. The determined values of the NIS performance metric for this example will hereinafter be referred to as the "first NIS performance metric values 204". In this embodiment, the first NIS performance metric values 204 are determined by the metric processor 14 during the step s6 of each of the iterations of steps s2 to s6 of the aircraft tracking evaluation process, as described above with reference to Figure 3. Also shown in Figure 4B is an upper confidence bound for the NIS performance metric 202, and a lower confidence bound for the NIS performance metric 206. In this embodiment, the confidence bounds for the NIS performance metric 202, 206 are conventional statistically calculated confidence bounds for the NIS performance metric. The x-axis of Figure 4B is the time-step at which the metric processor 14 determines values of the NIS performance metric. The x-axis of Figure 4B ranges from the first time-step t₁ to the seventh time-step t₇. The y-axis of Figure 4B is the respective value of the NIS performance metric determined by the metric processor 14 at a respective time-step.

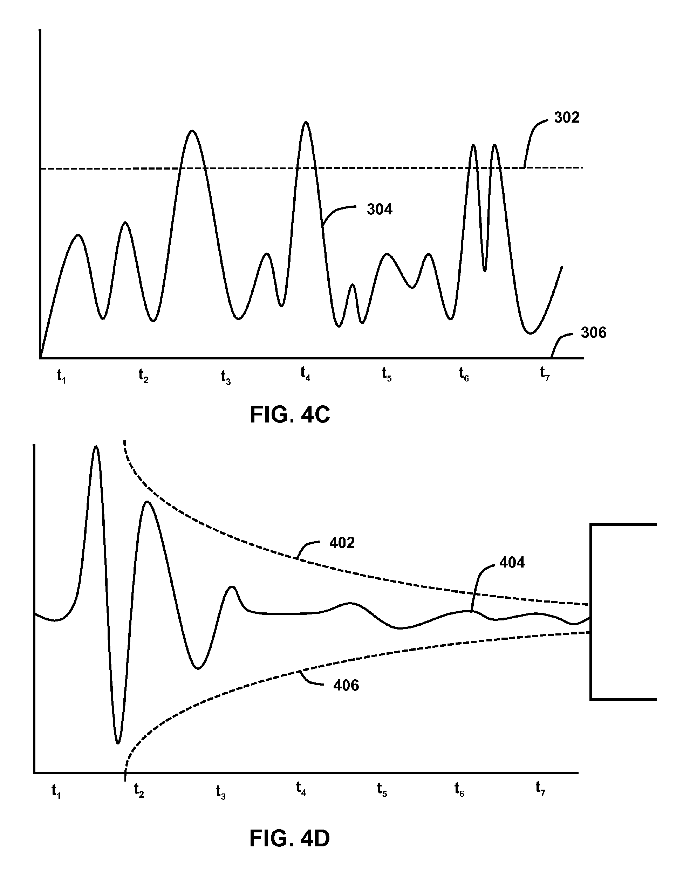

Figure 4C is an x-y graph showing a graphical representation of the filter efficiency check (FEC) performance metric for the time-steps t₁ - t₇, for this example. The determined values of the FEC performance metric for this example will hereinafter be referred to as the "first NIS performance metric values 304". In this embodiment, the first FEC performance metric values 304 are determined by the metric processor 14 during the step s6 of each of the iterations of steps s2 to s6 of the aircraft tracking evaluation process, as described above with reference to Figure 3. Also shown in Figure 4C is an upper confidence bound for the FEC performance metric 302, and a lower confidence bound for the FEC performance metric 306. In this embodiment, the confidence bounds for the FEC performance metric 302, 306 are conventional statistically calculated confidence bounds for the FEC performance metric. The x-axis of Figure 4C is the time-step at which the metric processor 14 determines values of the FEC performance metric. The x-axis of Figure 4C ranges from the first time-step t₁ to the seventh time-step t₇. The y-axis of Figure 4C is the respective value of the FEC performance metric determined by the metric processor 14 at a respective time-step.

Figure 4D is an x-y graph showing a graphical representation of the time-averaged normalised innovation autocorrelation (IA) performance metric for the time-steps t₁ - t₇, for this example. The determined values of the IA performance metric for this example will hereinafter be referred to as the "first IA performance metric values 404". In this embodiment, the first IA performance metric values 404 are determined by the metric processor 14 during the step s6 of each of the iterations of steps s2 to s6 of the aircraft tracking evaluation process, as described above with reference to Figure 3. Also shown in Figure 4D is an upper confidence bound for the IA performance metric 402, and a lower confidence bound for the IA performance metric 406. In this embodiment, the confidence bounds for the IA performance metric 402, 406 are conventional statistically calculated confidence bounds for the IA performance metric. The x-axis of Figure 4D is the time-step at which the metric processor 14 determines values of the IA performance metric. The x-axis of Figure 4D ranges from the first time-step t₁ to the seventh time-step t₇. The y-axis of Figure 4D is the respective value of the IA performance metric determined by the metric processor 14 at a respective time-step.

At step s10, timing information is determined for each of the performance metrics measured in step s6 of the aircraft tracking evaluation process. In this embodiment, the timing information for a performance metric is defined by a function, the value of which is equal to zero if the performance metric value is between the lower and upper confidence bounds for that performance metric, and is equal to one if the performance metric value lies outside the range between the lower and upper confidence bounds for that performance metric, i.e. the timing information value for a performance metric is given by the following function: $\begin{matrix}T \left({m}_{i}\right) & = 0 if {L}_{i} < {m}_{i} < {U}_{i} ; \\ & = 1 if {m}_{i} < {L}_{i} or {m}_{i} > {U}_{i}\end{matrix}$
where: *mᵢ* is the value of the *i*th performance metric. In this embodiment, *i* = *1*,...,*4*. Thus the values of *mᵢ*, *i* = *1*,...,*4*, are the values of the four performance metrics: the normalised innovation squared (NIS) performance metric, the time-averaged normalised innovation squared (TA NIS) performance metric, the filter efficiency check (FEC) performance metric, and the innovation autocorrelation (IA) performance metric. Also, in this embodiment the each of the performance metrics is a function of time, i.e. *mᵢ* = *mᵢ(t)*;
*T(mᵢ)* is the timing information of the *i*th performance metric;
*Li* is the statistically determined lower confidence bound of the *i*th performance metric; and
*Uᵢ* is the statistically determined upper confidence bound of the *i*th performance metric.

In this embodiment, the timing information is determined for each of the performance metrics by the metric processor 14. In this example, if the timing information for a particular performance metric is equal to one, it is concluded that that particular performance metric has detected an error event for the time period during which the timing information for the particular performance metric is equal to one.

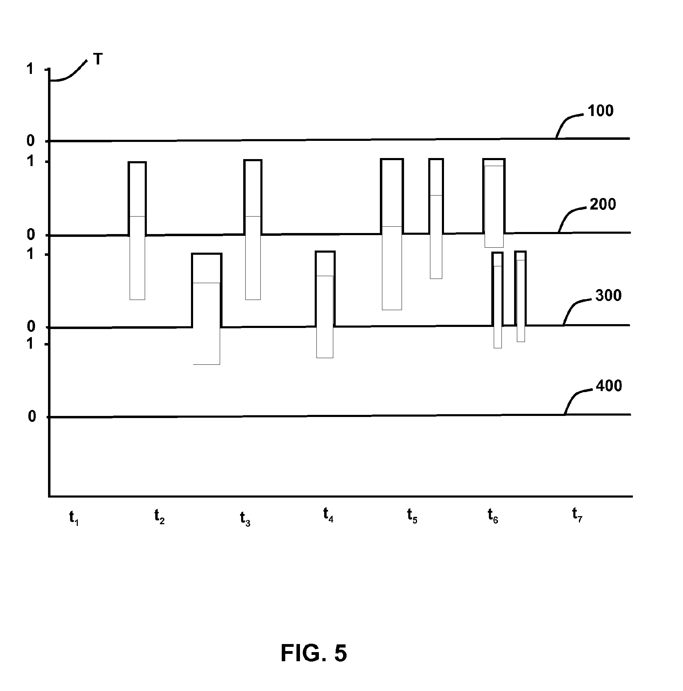

Figure 5 is an x-y graph showing a graphical representation of the timing information determined for each of the four performance metrics measured by the metric processor 14, i.e. the TA NIS, NIS, FEC and IA performance metrics, for this example. The timing information for the TA NIS performance metric for this example is hereinafter referred to as "the first TA NIS timing information 100". The timing information for the NIS performance metric for this example is hereinafter referred to as "the first NIS timing information 200". The timing information for the FEC performance metric for this example is hereinafter referred to as "the first FEC timing information 300". The timing information for the IA performance metric for this example is hereinafter referred to as "the first IA timing information 400". The timing information for each of the four performance metrics are shown on common axes for ease of comparison.

At step s12, a diagnostic analysis of the timing information of the performance metrics is performed. In this embodiment, the diagnostic analysis of the timing information of the performance metrics is performed to detect any performance characteristics that are indicated by the measured performance metrics during the time-steps t₁ - t₇. In this example, the performance characteristics being detected are sufficiently serious error events that have occurred during the aircraft tracking evaluation process. The terminology "sufficiently serious error event" is here to refer to an event, occurring over a particular time period, that causes errors in sufficient number and/or severity to warrant the aircraft position 3 and the estimated aircraft direction 5, as determined by the position processor 12 using the tracking algorithm, to be unacceptably inaccurate. However, in other embodiments, the terminology "performance characteristic" refers to different features that, for example, affect the performance of an algorithm.

In this example, a sufficiently serious error event has been deemed to have occurred if the timing information of two or more performance metrics registers an error event over a common time-period during the time-steps t₁ - t₇. The process of determining whether a sufficiently serious error event has occurred during the aircraft tracking evaluation process is performed as follows. Firstly, for each of the respective measured performance metrics (the TA NIS, NIS, FEC and IA performance metrics) a respective time-period or time-periods over which an error event is registered is/are determined, i.e. in this example, a time-period or time-periods that the timing information for each of the measured performance metrics is equal to one is determined. Secondly, the determined time-period or time-periods over which errors occur for the measured performance metrics are compared to each other. This is done to determine whether or not any of the compared time-periods overlap, i.e. whether or not any of the measured performance metrics register an error over a common time-period. If the determined time-periods for two or more performance metrics overlap, i.e. if two or more measured performance metrics register an error over a common time-period, it is concluded that a sufficiently serious error event has occurred over the period of time over which the overlap occurs.

In this embodiment, a sufficiently serious error event has been deemed to have occurred if the timing information of two or more performance metrics registers an error event over a common time-period during the time-steps t₁ - t₇. However, in other embodiments, a sufficiently serious error event has been deemed to have occurred if other criteria are satisfied, for example, if the timing information of two or more performance metrics registers an error event over a common time-period plus/minus a time threshold.

In this example, it can be seen from the timing information of the performance metrics, as shown in Figure 5, that the first TA NIS timing information and the first IA timing information 400 do not register an error event. However, the first NIS timing information 200 and the first FEC timing information 300 each show a series of error events occurring over the time-steps t₁ - t₇. In this example, the error events shown in the first NIS timing information 200 and the first FEC timing information 300 do not occur in the timing information plots of both performance metrics over a common time-period, i.e. there is no overlap in the time-periods of the performance metrics over which an error occurs. Thus, in this example, it is concluded that, although errors have occurred, an error event of sufficient severity has not, and consequently that the estimated aircraft positions 3 and the estimated aircraft directions 5, as determined by the position processor 12 using the tracking algorithm, are sufficiently accurate for each of the time-steps t₁ - t₇.

In other embodiments the diagnostic analysis of the timing information is performed in a different manner. For example, in other embodiments it is determined that a serious error event has occurred if a certain percentage of the timing information plots of the measured performance metrics show an error event. In other embodiments, a serious error event is deemed to have occurred only if it is registered by a number or percentage of the performance metrics over a common time-period and for a specific time duration. Also, in other embodiments the timing information is used in a prognostic analysis process instead of or in addition to the diagnostic analysis performed as described above. For example, in other embodiments, some or all of the timing information for the measured performance metrics, and/or the performance metrics themselves, is used in a diagnostic and/or prognostic analysis process utilising a Bayesian network and/or a neural network and/or any other machine learning/artificial intelligence/decision making algorithm or a combination of the above.

In the above embodiments, the measured performance metrics tend to aid in the determination and/or identification of reasons why a particular tracking algorithm is not working as expected. For example, that the dynamics of the aircraft have not been modelled correctly could be determined by a certain combination of metrics having gone beyond their confidence bounds in a certain order. In certain embodiments, an expert is used to determine these aforementioned reasons. In other embodiments, the aforementioned reasons are determined automatically using any of the previously mentioned machine learning algorithms. Also, in other embodiments the diagnosis tool is trained to improve its diagnostic performance given guidance from an expert.

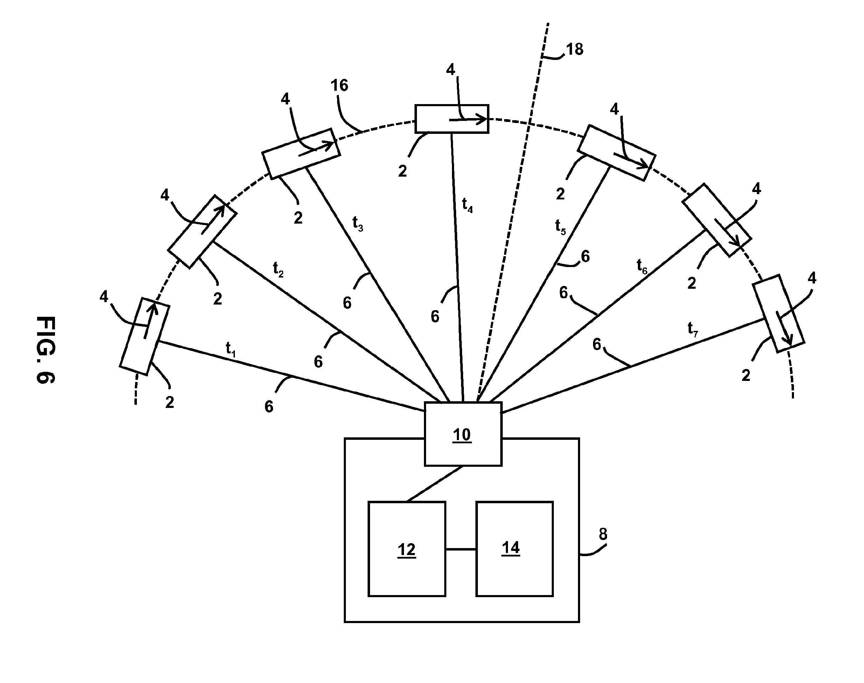

A further example of operation of the embodiment in which a sensor malfunction occurs will now be described. The sensor malfunction will be described in greater detail later below with reference to Figure 6. The further example utilises the aircraft tracking evaluation process, as described above with reference to Figure 3, i.e. steps s2 to s12 as described above are utilised in the further example in the same way as in the above example. However, the further example differs over the example described above (with reference to Figures 1 to 5) in that the data corresponding to the sensor readings 6 of the aircraft 2 taken after the occurrence of the sensor malfunction comprises errors in addition to those resulting from the random noise, as described in more detail later below.

Figure 6 is a schematic illustration of the aircraft 2 being tracked by an aircraft tracking device 8 over a period of time. The following entities are common to both Figure 1 and Figure 6 and are indicated by the same reference numerals: the aircraft 2 at respective positions corresponding to the respective time-steps t₁ - t₇, the respective true aircraft directions 4 at each of the respective time-steps t₁ - t₇, and the respective sensor readings 6 of the aircraft 2 for each of the respective time-steps t₁ - t₇, the true aircraft path 16, and the aircraft tracking device 8 comprising the sensor 10, the position processor 12, and the metric processor 14. In addition to the entities present in Figure 1, in Figure 6 an event of a malfunction occurring in the sensor 10, hereinafter referred to as the "sensor malfunction event 18", is indicated as a dotted line. The sensor malfunction event 18 represents a point in time from which the sensor 10 ceases to operate as expected. Thus, measurements taken by the sensor 10 after the sensor malfunction event 18 will be affected. In this example, measurements taken by the sensor 10 after the sensor malfunction event 18 will be subject to errors in addition to random noise, as described above. Thus, data corresponding to measurements taken after the sensor malfunction event 18, and used by the position processor 12 to estimate the position of the aircraft 2 and the estimated aircraft direction 5, will contain errors in addition to noise. In this example, the sensor malfunction event 18 is positioned between the fourth time-step t₄ and the fifth time-step t₅. Thus, in this example, the sensor readings 6 taken of the aircraft 2 at the fifth, sixth and seventh time-steps t₅ - t₇ are affected by the sensor malfunction event 18 and errors will be present in the data corresponding to the senor readings 6 taken at these time-steps in addition to the random noise already present.

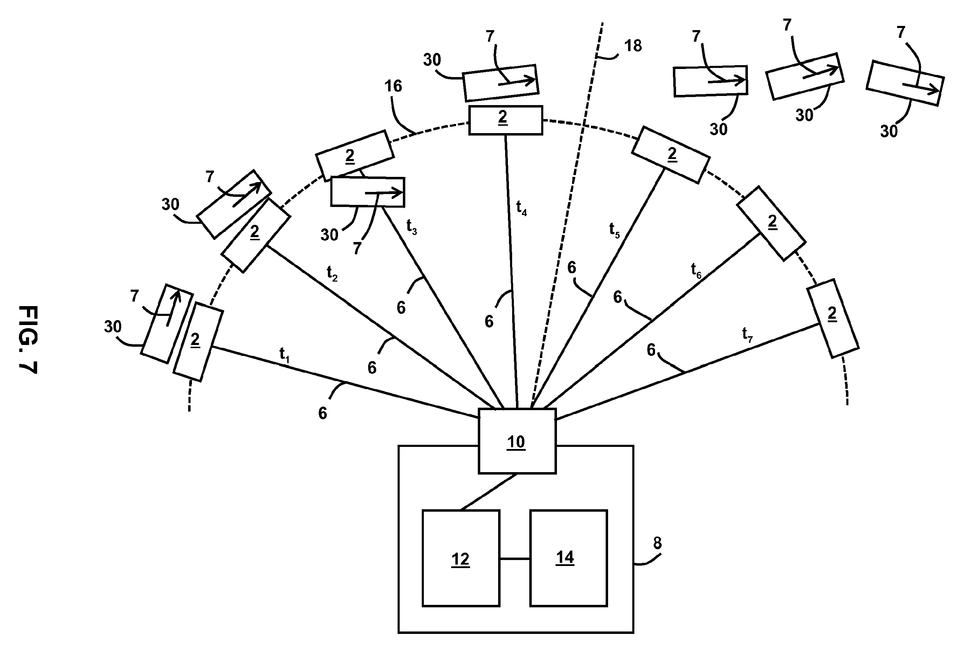

Figure 7 is a schematic illustration showing, in addition to the elements shown in Figure 6 and for each of the respective time-steps t₁ - t₇, a further estimated respective position of the aircraft 2, hereinafter referred to as "further estimated aircraft positions 30" and a further estimated direction in which the aircraft is travelling, hereinafter referred to as the "further estimated aircraft direction 7". The further estimated aircraft positions 30 and the further estimated aircraft directions 7 are determined by the position processor 12 during the aircraft tracking evaluation process, as described above with reference to Figure 3. For ease of comparison, the further estimated aircraft positions 30 and the further estimated respective aircraft directions 7 for the respective time-steps t₁ - t₇ are shown relative to the true positions of the aircraft 2, the true aircraft path 16, and the aircraft tracking device 8.

A comparison of Figures 6 and 7 shows that, over the time-steps t₁ - t₇, the further estimated aircraft position 30 and the further estimated aircraft direction 7, which are determined by the position processor 12, deviate from the true aircraft path 16. In this example, the aircraft 2 is estimated to be further away from the aircraft tracking device 8 than is actually the case. The deviation of the further estimated aircraft positions 30 and the further estimated aircraft directions 7 from the true aircraft positions and direction are due to noise or noise and errors due to sensor malfunction. In this example, the data corresponding to the sensor measurements 6 of the aircraft 2 taken at the first, second, third and fourth time-steps t₁ - t₄ is affected by random noise, as described above. In this example, the data corresponding to the sensor measurements 6 of the aircraft 2 taken at the fifth, sixth and seventh time-steps t₅ - t₇ is affected by a combination of noise and the malfunctioning of the sensor 10. In this example, the errors present in the data have a cumulative effect on the estimated aircraft position and direction at each time-step, causing the further estimated aircraft position 30 to deviate more from the true aircraft path 16 with each time-step.

A comparison of Figures 2 and 7 shows that in these examples, over the time-steps t₁ - t₄, the estimated aircraft position 3 together with the estimated aircraft direction 5 do not differ substantially from the further estimated aircraft position 30 and the further estimated aircraft direction 7. This is because in both examples the respective sensor readings 6 of the aircraft 2 used to calculate the respective estimated positions and directions of the aircraft 2 at the respective time-steps t₁ - t₄, are all subject to the same level of random noise and no other error causing influence. Thus, the noise in the data corresponding to the sensor readings 6 taken at the time-steps t₁ - t₄ in the further example is of substantially the same severity as the noise in the corresponding data of the previous example. However, over the time-steps t₅ - t₇, the estimated aircraft position 3 together with the estimated aircraft direction 5 do differ substantially from the further estimated aircraft position 30 and the further estimated aircraft direction 7. This is because in the further example the respective sensor readings 6 of the aircraft 2 used to calculate the respective estimated positions and directions of the aircraft 2 at the respective time-steps t₅ - t₇, contain errors resulting from the sensor malfunction event 18 in addition to random noise, whereas, in the previous example the respective sensor readings 6 merely contain random noise. Thus, in the further example, as a result of the sensor malfunction, the errors contained in the data corresponding to the sensor readings 6 at the time-steps t₅ - t₇ are more numerous and/or of greater severity than the errors in the data corresponding to the sensor readings 6 taken at the time-steps t₅ - t₇ in the previous example.

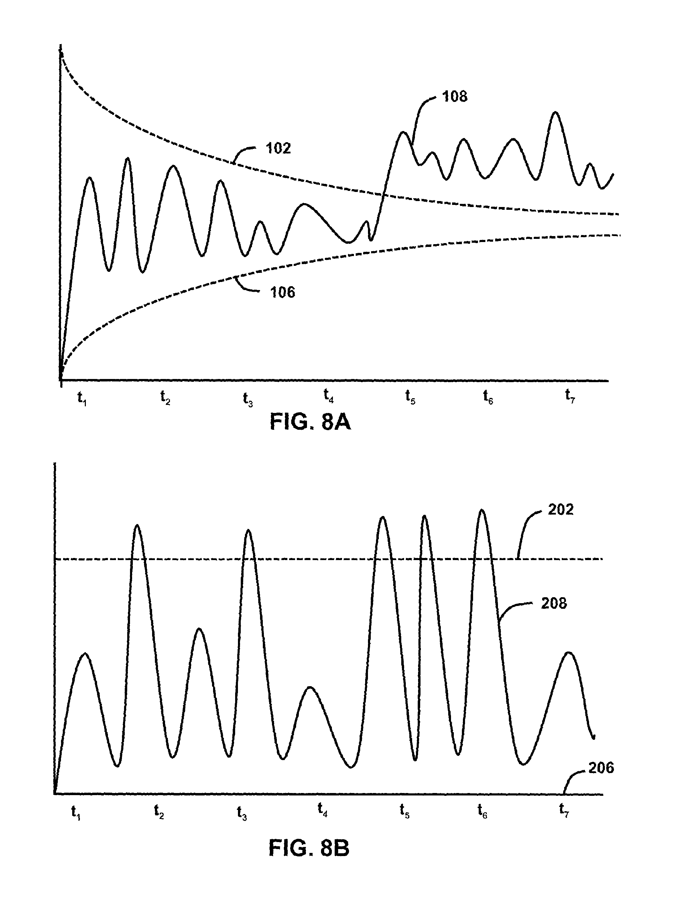

Figures 8A to 8D illustrate the iterations of step s6 of the aircraft tracking evaluation process, as described above with reference to Figure 2. Steps s10 and s12 of the process of Figure 2 described above will be described after the discussion of these Figures.

Figure 8A is an x-y graph showing a graphical representation of the time-averaged normalised innovation squared (TA NIS) performance metric for the time-steps t₁ - t₇, for the further example. The determined values of the TA NIS performance metric for the further example will hereinafter be referred to as the "second TA NIS performance metric values 108". In this example, the second TA NIS performance metric values 108 are determined by the metric processor 14 during the step s6 of each of the iterations of steps s2 to s6 of the aircraft tracking evaluation process, as described above with reference to Figure 3. Also shown in Figure 8A, for ease of comparison with Figure 4A, are the upper confidence bound for the TA NIS performance metric 102, and the lower confidence bound for the TA NIS performance metric 106, as described above with reference to Figure 4A. The x-axis of Figure 8A is the time-step at which the metric processor 14 determines values of the TA NIS performance metric. The x-axis of Figure 8A ranges from the first time-step t₁ to the seventh time-step t₇. The y-axis of Figure 8A is the respective value of the TA NIS performance metric determined by the metric processor 14 at a respective time-step.

Figure 8B is an x-y graph showing a graphical representation of the normalised innovation squared (NIS) performance metric for the time-steps t₁ - t₇, for the further example. The determined values of the NIS performance metric for the further example will hereinafter be referred to as the "second NIS performance metric values 208". In this example, the second NIS performance metric values 208 are determined by the metric processor 14 during the step s6 of each of the iterations of steps s2 to s6 of the aircraft tracking evaluation process, as described above with reference to Figure 3. Also shown in Figure 8B, for ease of comparison with Figure 4B, are the upper confidence bound for the NIS performance metric 202, and the lower confidence bound for the NIS performance metric 206, as described above with reference to Figure 4B. The x-axis of Figure 8B is the time-step at which the metric processor 14 determines values of the NIS performance metric. The x-axis of Figure 8B ranges from the first time-step t₁ to the seventh time-step t₇. The y-axis of Figure 8B is the respective value of the NIS performance metric determined by the metric processor 14 at a respective time-step.

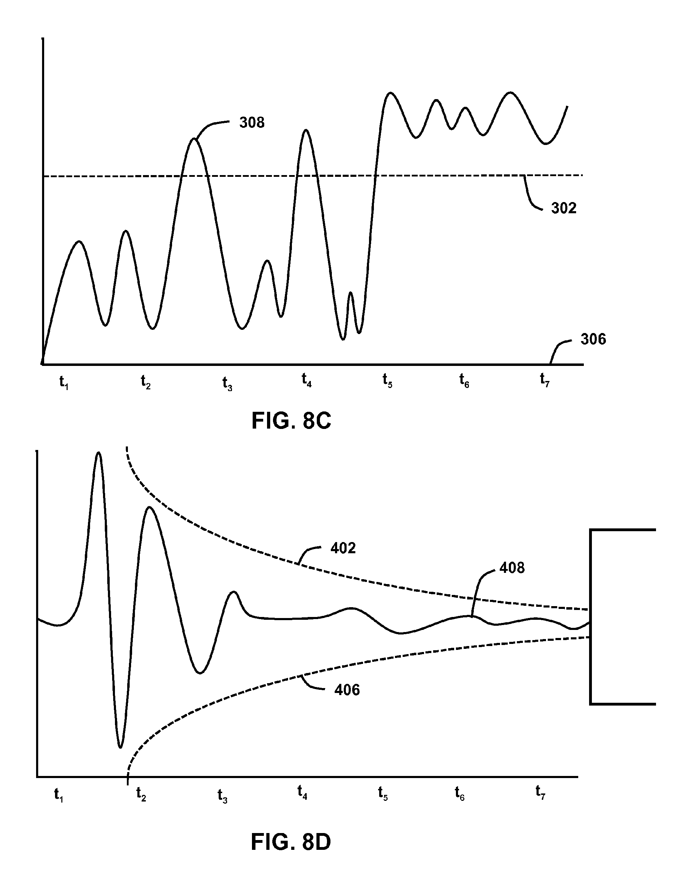

Figure 8C is an x-y graph showing a graphical representation of the filter efficiency check (FEC) performance metric for the time-steps t₁ - t₇, for the further example. The determined values of the FEC performance metric for the further example will hereinafter be referred to as the "second FEC performance metric values 308". In this example, the second FEC performance metric values 308 are determined by the metric processor 14 during the step s6 of each of the iterations of steps s2 to s6 of the aircraft tracking evaluation process, as described above with reference to Figure 3. Also shown in Figure 8C, for ease of comparison with Figure 4C, are the upper confidence bound for the FEC performance metric 302, and the lower confidence bound for the FEC performance metric 306, as described above with reference to Figure 4C. The x-axis of Figure 8C is the time-step at which the metric processor 14 determines values of the FEC performance metric. The x-axis of Figure 8C ranges from the first time-step t₁ to the seventh time-step t₇. The y-axis of Figure 8C is the respective value of the FEC performance metric determined by the metric processor 14 at a respective time-step.

Figure 8D is an x-y graph showing a graphical representation of the time-averaged normalised innovation autocorrelation (IA) performance metric for the time-steps t₁ - t₇, for the further example. The determined values of the IA performance metric for the further example will hereinafter be referred to as the "second IA performance metric values 408". In this example, the second IA performance metric values 308 are determined by the metric processor 14 during the step s6 of each of the iterations of steps s2 to s6 of the aircraft tracking evaluation process, as described above with reference to Figure 3. Also shown in Figure 8D, for ease of comparison with Figure 4D, are the upper confidence bound for the IA performance metric 402, and the lower confidence bound for the IA performance metric 406, as described above with reference to Figure 4D. The x-axis of Figure 8D is the time-step at which the metric processor 14 determines values of the IA performance metric. The x-axis of Figure 8D ranges from the first time-step t₁ to the seventh time-step t₇. The y-axis of Figure 8D is the respective value of the IA performance metric determined by the metric processor 14 at a respective time-step.

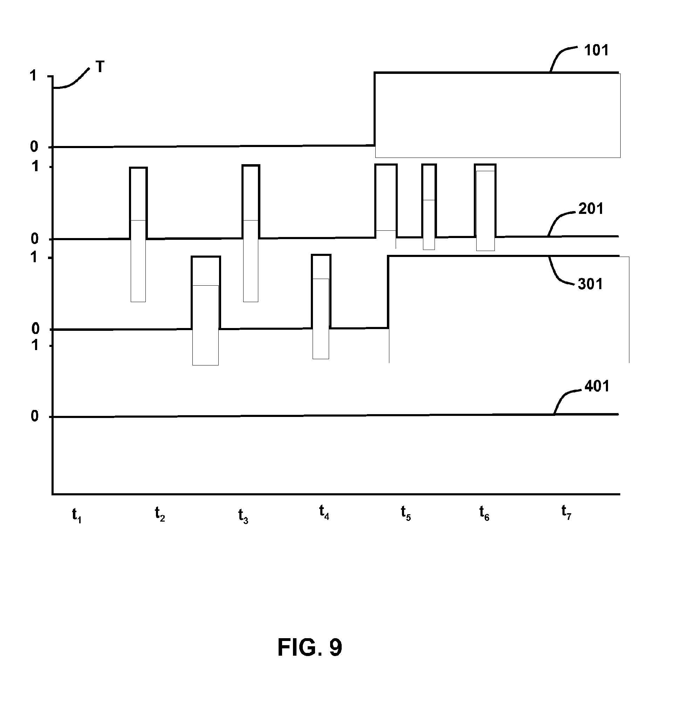

Figure 9 is an x-y graph showing a graphical representation of the timing information determined for each of the four performance metrics measured by the metric processor 14, i.e. the NIS, TA NIS, FEC and IA performance metrics, in the further example. The timing information for the TA NIS performance metric for the further example is hereinafter referred to as "the second TA NIS timing information 101". The timing information for the NIS performance metric for the further example is hereinafter referred to as "the second NIS timing information 201 ". The timing information for the FEC performance metric for the further example is hereinafter referred to as "the second FEC timing information 301". The timing information for the IA performance metric for the further example is hereinafter referred to as "the second IA timing information 401". The timing information for each of the four performance metrics are shown on common axes for ease of comparison.

In this example, the timing information determined in the further example is interpreted in the same way as the timing information determined for the previously described example, as described above with reference to Figure 3 (i.e. at step s12 of the aircraft tracking evaluation process).

In this example, the timing information of the performance metrics, as shown in Figure 9, is analysed using the process of determining whether a sufficiently serious error event has occurred as described above with reference to step s12 of the aircraft tracking evaluation process (Figure 3). Using this process it is determined that the second TA NIS timing information 101 indicates a prolonged error event starting between the fourth time-step t₄ and the fifth time-step t₅. Also, the second NIS timing information 201 shows a series of error events occurring over the time-steps t₁ - t₇, as in the previous example as described above with reference to Figure 5. Also, the second FEC timing information 301 indicates a prolonged error event, starting slightly before the fifth time-step t₅, in addition to the error events that occurred before this point which occurred in the previous example as described above with reference to Figure 5. The second IA timing information 401 does not indicate an error event.

In this example, portions of the prolonged error events shown in the second TA NIS timing information 101 and the second FEC timing information 301 occur in the timing information plots of both performance metrics over a common time-period. Thus, in this example, it is concluded that, an error event of sufficient severity has occurred. Additionally, it is concluded that the error event of sufficient severity started slightly before the fifth time-step t₅. Thus, it is concluded that the error event of sufficient severity affected the sensor reading 6 taken of the aircraft 2 in the fifth, sixth and seventh time-steps t₅ - t₇. Consequently, it is concluded that the positions of the aircraft 2 and the estimated aircraft directions 4, as determined by the position processor 12 using the tracking algorithm, unacceptably inaccurate for each of the fifth, sixth and seventh time-steps t₅ - t₇.

Thus, the above described processes advantageously tend to provide improved insight into numerical instability, filter code implementation, unmodelled process dynamics, unmodelled observation dynamics, mismatched noise covariances, and algorithm benchmarking. Conventional filtering applications tend not check these causes and effects, thus the above described processes tend to reduce propagation and/or accumulation of errors due to noise and/or error events, for example in a state vector and/or a covariance matrix.

A further advantage provided by the above described processes is that diagnosis of a sufficiently serious error event tends to be aided. For example, unexpected behaviour of one or more performance metrics tends to be correlated in time to the occurrence of the sufficiently serious error event.

A further advantage provided by the above described processes is that a measure of how well an algorithm, for example the tracking algorithm, is performing tends to be provided. This advantage tends to be irrespective of whether or not a sufficiently serious error event occurs. For example, a measure of algorithm performance tends to be provided by the frequency and/or duration of errors being registered in the timing information of the measured performance metrics.

A further advantage provided by the above described processes is that a method of comparison of the respective performance levels of more than one respective algorithm tends to be provided. For example, the frequency and/or duration of errors registered in the timing information of measured performance metrics can be compared for each tracking algorithm in a plurality of tracking algorithms. In this way, a best performing tracking algorithm can be identified, and used, for a particular situation requiring a tracking algorithm.

A further advantage provided by the above described processes is that processes of validation and/or tuning of different sensor models and/or process models tend to be aided.

A further advantage provided by the above described processes is that insight into how errors and/or the sources of errors propagate through an algorithm, for example a tracking algorithm, tends to be provided.

A further advantage provided by the above described processes is that an accurate value for the variance of the experienced noise tends to be obtained. This parameter may be used within the Kalman Filter, for example, by iteratively adjusting the value of the variance passed to Kalman Filter, and analysing the performance metrics, an appropriate variance can be obtained. Also, the noise characteristics of the tracking algorithm tend to be improved.

A further advantage provided by the above described processes is that filter initialisation tends to be improved.

A further advantage provided by the above described processes is that a measurement of filter performance tends to be provided.

In the above embodiment, an aircraft is tracked by an aircraft tracking device. However, in other embodiments any number of any objects is tracked by any number of appropriate tracking devices comprising any number of appropriate sensors.

In the above embodiments, the performance of a particular tracking algorithm, as described above, is evaluated. However, in other embodiments the performance of any appropriate algorithm is evaluated. For example, in other embodiments the performance of a simultaneous localisation and mapping (SLAM) algorithm is evaluated.

In the above embodiments, the performance of a single algorithm is evaluated. However, in other embodiments, the performances of any number of algorithms are evaluated. For example, in other embodiments the performances of a plurality of algorithms are evaluated and compared in order to determine a best performing algorithm, which is then utilised going forward, by being the algorithm chosen for use in implementing the relevant task when required (as opposed to the lesser performing algorithms(s)). Another possibility is that the results from the best performing algorithm are used as the final results, and the results from the lesser performing algorithm(s) are discarded.

In the above embodiment the performance of the tracking algorithm is evaluated over seven time-steps t₁ - t₇. However, in other embodiments the performance of the tracking algorithm is evaluated over any number of time-steps spanning any duration of time. In other embodiments, the performance of the tracking algorithm is evaluated at a series of discrete time-steps. In other embodiments, the performance of the tracking algorithm is evaluated for a continuous time-period.

In the above embodiments, the sensor observations are taken at discrete time-steps t₁ - t₇, i.e. the sensor is sampled at a specific frequency. However, in other embodiments, the sensor observations are taken over a continuous time-space. In other embodiments, a filtering and/or estimation algorithm that has a continuous time-space is used. In other embodiments, a filtering and/or estimation algorithm with no time-domain is used.

In the above embodiments, the performance metrics are measured at discrete time-steps t₁ - t₇. However, in other embodiments, the performance metrics are measured over a continuous time-space.

In the above embodiment, the aircraft tracking device comprises a sensor, a position processor and a metric processor. However, in other embodiments the aircraft tracking device comprises one or more different appropriate entities that provide the same functionality as the sensor, the position processor and the metric processor. In other embodiments, the functionality provided by the aircraft tracking device is provided by a plurality of separate devices.

In the above embodiment, the steps (steps s2 to s12) of the aircraft tracking evaluation process, described above with reference to Figure 3, are performed consecutively. However, in other embodiments the some or all of the steps of the aircraft tracking evaluation process are performed in a different order or concurrently, or overlapping temporally to some extent, providing the functionality above.

In the above embodiments, the performance metrics are measured and processed by the metric processor. However, in other embodiments the performance metrics are processed by a different device, external to the aircraft tracking device. For example, in other embodiments the performance metrics are measured and/or processed by a Filter Analysis Tool, external to the aircraft tracking device, which can be used to evaluate the performance of one or more tracking devices and/or tracking algorithms.

In the above embodiments, the upper and lower confidence bounds for the measured performance metrics are conventional statistically determined confidence bounds. However, in other embodiments, one or more of the upper and/or lower confidence bounds of the measured performance metrics is determined in a different manner, for example one or more of the upper and/or lower confidence bounds of the measured performance metrics is a user specified threshold.

In the above embodiments, the normalised innovation squared (NIS) performance metric, the time-averaged normalised innovation squared (TA NIS) performance metric, the filter efficiency check (FEC) performance metric, and the time-averaged normalised innovation autocorrelation (IA) performance metric are measured and processed to evaluate the performance of the tracking algorithm. However, in other embodiments, any different appropriate performance metrics are measured and processed. For example, in other embodiments the tracking algorithm performance is evaluated by measuring and processing the normalised innovation squared (NIS) performance metric, the time-averaged normalised innovation squared (TA NIS) performance metric, the filter efficiency check (FEC) performance metric, the time-averaged normalised innovation autocorrelation (IA) performance metric, the nominal filter performance (NFP) performance metric, the normalised estimation error squared (NEEC) performance metric, the Cramér-Rao lower bound (CRLB), the goodness-of-fit test (GFT), the time-averaged goodness-of-fit test (TA GFT), the filter numerical stability (FNS) performance metric, and the covariance conditioning (CC) performance metric.

### ANNEX - FURTHER DETAILS OF SOME OF THE ABOVE MENTIONED PERFORMANCE METRICS.

### FILTER BACKGROUND (Referred to later below)

There are three requirements that may be used to define filter performance. The first states that the filter must converge in the mean squared error (MSE) sense. This is the property of convergence and is given as: ${lim}_{k \to ∞} ⁢ E ⁢ \left[{\left[x-\hat{x}\left(k⁢{z}^{k}\right)\right]}^{2}\right] = 0$
where *x* and *x̂* are the true and filter estimated states respectively. The second states that the filter must converge to the correct value. This is the property of consistency. In this work we define consistency for the first moment (mean) as: $E ⁢ \left[x\left(k\right)-\hat{x}\left(k|k\right)\right] = 0$
where the state error should be zero mean (unbiased), and the second moment (variance), defined as: $E ⁢ \left[\left[x\left(k\right)-\hat{x}\left(k|k\right)\right]⁢{\left[x\left(k\right)-\hat{x}\left(k|k\right)\right]}^{T}\right] ≡ P \left(k|k\right)$
where the true mean squared error (the true covariance) on the left hand side (LHS) should be equivalent to the filter calculated covariance **P** on the right hand side (RHS). Finally, the filter must be computationally efficient (complexity). The complexity requirement is defined as a function relating the size of the input to the number of steps (time complexity) or storage locations (space complexity) it takes to complete a problem.

### NOMINAL FILTER PERFORMANCE

The nominal filter performance (NFP) measures the overall uncertainty in the state estimate. In this case the determinant or trace is commonly used. The determinant can be interpreted geometrically as the volume of the hyperellipsoid that characterizes the uncertainty of the parameter estimates provided by the filter. Alternatively, the trace, the derivative of the determinant at the identity, can be geometrically interpreted as the change in the volume of the hyperellipsoid. The NFP can be defined as the estimated standard deviation error (SDE) σ̂(*k*) compared to the true SDE σ(*k*): $σ \left(k\right) = \sqrt{{\left(\hat{x}\left(k\right)-x\left(k\right)\right)}^{T} ⁢ \left(\hat{x}\left(k\right)-x\left(k\right)\right)}$ $\hat{σ} \left(k\right) = \sqrt{trace \left(P\left(k|k\right)\right)}$

On average for an unbiased estimator σ̂(*k*)=σ(*k*). A tolerance can be placed on this, such that a filter is deemed successful if the true SDE does not exceed the estimated SDE by more than, for example, 50%. $0.5 < \frac{σ \left(k\right)}{\hat{σ} \left(k\right)} < 1.5$

### NORMALISED ESTIMATION ERROR SQUARED

The normalised estimation error squared (NEES) measures the consistency of the filter. The NEES metric is given as: ${ϵ}_{P} \left(k\right) = {\left[x\left(k\right)-\hat{x}\left(k\right)\right]}^{T} ⁢ {P}^{- 1} \left(k|k\right) ⁢ \left[x\left(k\right)-\hat{x}\left(k\right)\right]$
where **P** is the estimated covariance and ∈ is a scalar value with a chi-squared distribution with nₓ degrees of freedom. A chi-squared test can be used to accept a null hypothesis that the filter is consistent for a single run test if: $ϵ \left(k\right) \leq {χ}_{{n}_{α} , 1 - α}^{2}$
where α is the significance level. However, typically many runs are required to verify whether a filter is consistent. Therefore, it is recommended that all these performance metrics should also be applied using Monte Carlo runs. The average NEES for a set of N simulations is obtained by: $\overline{ϵ} \left(k\right) = \frac{1}{N} {\sum }_{i = 1}^{N} {ϵ}^{i} \left(k\right)$

A two-tailed chi-squared test can be carried out on the average NEES, with acceptance bounds given as: $\overline{ϵ} \left(k\right) ∈ \left[{r}_{1}⁢{r}_{2}\right]$
Where ${r}_{1} = \frac{{χ}_{{n}_{α} , β}^{2}}{N}$ ${r}_{2} = \frac{{χ}_{{n}_{α} , 1 - β}^{2}}{N}$

Noting that the number of degrees of freedom is now given by nₓ = *N*dim(x) and given a two-sided test, the probability region is defined from β = α/2. A filter is deemed consistent if, ${r}_{1} \leq \overline{ϵ} \left(k\right) \leq {r}_{2}$
optimistic if: $\overline{ϵ} \left(k\right) > {r}_{2}$
or pessimistic if: $\overline{ϵ} \left(k\right) < {r}_{1}$

### CRAMÉR-RAO LOWER BOUND

The Cramér-Rao lower bound (CRLB) can be used for comparing filters and comparing changes to filters. In order to implement the CRLB we assume that our estimator is an extended Kalman filter (EKF) with the linearised state model: ${x}_{k + 1} = {f}_{k} \left({x}_{k}\right) + {w}_{k}$ ${z}_{k + 1} = {h}_{k} \left({x}_{k}\right) + {v}_{k}$
where the additive noise terms w and v are Gaussian with zero mean and invertible covariance matrices **Q** and **R** respectively, and **F**ₖ and **H**ₖ are the Jacobians of the nonlinear functions f and h respectively, that is: ${F}_{k} = {\left[{∇}_{x}⁢f⁢{\left(k⁢x\right)}^{T}\right]}^{T}$ ${H}_{k + 1} = {\left[{∇}_{x}⁢h⁢{\left(k+1,x\right)}^{T}\right]}^{T}$

The sequence of **J**ₖ of posterior submatrices for estimating state vectors obeys: ${J}_{k + 1} = {D}_{k}^{22} - {D}_{k}^{21} ⁢ {\left({J}_{k}+{D}_{k}^{11}\right)}^{- 1} ⁢ {D}_{k}^{12}$
where ${D}_{k}^{11} = E \left\{{F}_{k}^{T}⁢{Q}_{k}^{- 1}⁢{F}_{k}\right\}$ ${D}_{k}^{12} = - E \left\{{F}_{k}^{T}\right\} ⁢ {Q}_{k}^{- 1} = {\left[{D}_{k}^{21}\right]}^{T}$ ${D}_{k}^{22} = {Q}_{k}^{- 1} + E \left\{{H}_{k + 1}^{T}⁢{R}_{k + 1}^{- 1}⁢{H}_{k + 1}\right\}$
where is the information gained from a landmark and the information gained from the vehicle. The recursion is initialised with J₀ = where P₀ is the covariance of the initial state. It is important to note that the expectation operator E used in (21-23) can be dropped for a linear system (as it is constant in time), or in the case where a groundtruth state xₖ is known and can be calculated at each time interval. Otherwise, the expectation can be taken either analytically by integrating over the state, or approximating by taking the mean over several Monte Carlo simulations. Combining (20) with the terms defined in (21- 23) and dropping the expectation operator, the CRLB can be written as: ${J}_{k + 1} = {Q}_{k}^{- 1} + {H}_{k + 1}^{T} ⁢ {R}_{k + 1}^{- 1} ⁢ {H}_{k + 1} - {Q}_{k}^{- 1} ⁢ {F}_{k} ⁢ \left({J}_{k}+{F}_{k}^{T}⁢{Q}_{k}^{- 1}⁢{F}_{k}\right) ⁢ {F}_{k}^{T} ⁢ {Q}_{k}^{- 1}$

Using the matrix inversion lemma: ${\left(A+{BCB}^{T}\right)}^{- 1} = {A}^{- 1} - {A}^{- 1} ⁢ B \times {\left({B}^{T}⁢{A}^{- 1}⁢B+{C}^{- 1}\right)}^{- 1} ⁢ {B}^{T} ⁢ {A}^{- 1}$
where (24) can be simplified to: ${{P}^{*}}_{k + 1} = {\left[{\left({Q}_{k}+{F}_{k}⁢{P}_{k}⁢{F}_{k}^{T}\right)}^{- 1}+\left({H}_{k + 1}^{T}⁢{R}_{k + 1}^{- 1}⁢{H}_{k + 1}\right)\right]}^{- 1}$
given that: ${J}_{k + 1} = {\left({P}_{k + 1}^{*}\right)}^{- 1} .$

### FILTER EFFICIENCY CHECKS

The filter efficiency checks (FEC) allow the efficiency to be measured in two ways. First, by applying a chi-square test on the NEES of J given as: ${ϵ}_{J} \left(k\right) = {\left[x\left(k\right)-\hat{x}\left(k\right)\right]}^{T} J \left(k|k\right) ⁢ \left[x\left(k\right)-\hat{x}\left(k\right)\right]$
and second, by using the ratio of ∈*_{J}* (*k*) to the ∈*_{P}* (*k*) from (7): ${ϵ}_{min} \left(k\right) = \frac{{ϵ}_{J} \left(k\right)}{{ϵ}_{P} \left(k\right)}$
If ∈*ᵣₐₜᵢₒ* (*k*) > 1 then the filter is deemed optimistic, otherwise the filter is deemed pessimistic, except for ∈*ᵣₐₜᵢₒ* (*k*) = 1, when the filter is perfectly efficient.

### NORMALISED INNOVATION SQUARED

The normalised innovation squared (NIS) is in a stochastic sense, the difference between the actual z and predicted z observations, defined as: ${ε}_{S} \left(k\right) = ν ⁢ {\left(k\right)}^{T} ⁢ {S}^{- 1} \left(k\right) ⁢ ν \left(k\right)$ where S is the innovation covariance and ν is the innovation residual. The value of the NIS has a chi-squared distribution and can be tested for filter consistency in a similar way to previous metrics. The NIS indicates if the observations are more or less noisy than the filter expects. A possible cause of the NIS falling outside of the chi-squared bounds is that the innovation sequence does not have AWGN with zero mean and with the computed variance.

### TIME-AVERAGED NORMALISED INNOVATION SQUARED

In the case where it is not possible, or impractical to get Monte Carlo runs of a filter in operation, the time-averaged NIS can be calculated. This allows for a single value of consistency to be checked and possibly corrected in real-time. The time-averaged NIS for a total number of time-steps K is given by: ${\overline{ε}}_{S} \left(k\right) = \frac{1}{K} {\sum }_{k = 1}^{K} ν ⁢ {\left(k\right)}^{T} ⁢ {S}^{- 1} \left(k\right) ⁢ ν \left(k\right)$

If it is necessary to tune a filter parameter in real-time, then the time-averaged NIS would be skewed by prior data. An exponentially moving average can be used for finding a time-averaged NIS: ${ε}^{γ} \left(k\right) = γε \left(k\right) + \left(1-γ\right) ⁢ {ε}^{γ} ⁢ \left(k-1\right)$
where γ is a weighting factor between 0 < γ < 1 and is calculated based on the number of time periods *K* to average over: $γ = \frac{2}{K + 1}$

Using a two-sided chi-squared test with n_{ν} = *K* dim(ν) dimensions, the consistency can be determined for the filter in real-time. A possible cause of the time-averaged NIS falling below the chi-squared lower bound is that the noise levels in the filter are too high.

### TIME-AVERAGED NORMALISED INNOVATION AUTOCORRELATION

The autocorrelation of the innovations ρ(*l*) can be used to check if the sequence of observations is zero mean and uncorrelated. This is written as the time-averaged innovation autocorrelation (IA): $\overline{ρ} \left(l\right) = {\sum }_{k = 1}^{K} ν ⁢ {\left(k\right)}^{T} ⁢ ν ⁢ \left(k+l\right) ⁢ {\left[{\sum }_{k = 1}^{K}ν⁢{\left(k\right)}^{T}⁢ν\left(k\right){\sum }_{k = 1}^{K}ν⁢{\left(k+l\right)}^{T}⁢ν⁢\left(k+l\right)\right]}^{- 1 / 2}$
where *l* defines the sampling size and ρ(*l*) has a normal distribution with standard deviation The sequence of innovations can be determined as uncorrelated if the value of ρ(*l*) lies within: $- rσ \leq \overline{ρ} \left(l\right) \leq rσ$
where r is the confidence interval for a given certainty based on the normal distribution. An indication of the innovation sequence failing its whiteness test is when the IA consistently exceeds its ∼95% confidence bound (where r = 2). This can indicate that either the process model has significant higher-order unmodelled dynamics, or the ratio of observations to process noise is too high or the sequence of innovations is uncorrelated.

### GOODNESS-OF-FIT TEST

The goodness-of-fit test (GFT) is given as: ${ε}_{R} \left(k\right) = {ν}^{T} \left(k\right) ⁢ {R}^{- 1} ⁢ ν \left(k\right)$
where ν (k) is the innovation residual. Using a two-sided chi-squared test with n_{ν} = *K*dim(ν) dimensions, the GFT can be used to determine whether the innovation is acceptable. This indicates whether observations are truly Gaussian or not.

### FILTER NUMERICAL STABILITY

Filter numerical stability (FNS) tests ensure that the estimated covariance P has all the properties of a covariance. It must be invertible, i.e. non-singular: $det \left(P\left(k|k\right)\right) \neq 0$
positive definite: ${x}^{T} ⁢ Px > 0 ∀ x \neq 0$
full rank and symmetrical (square). Some of these characteristics are often not met, with tolerances placed on them and or routines to enforce them. If numerical instability is not dealt with errors will accumulate and the filter will become inconsistent, problematic, ill-conditioned or unstable.

### COVARIANCE CONDITIONING

The covariance condition (CC) value provides a sensitivity bound or measure of error for the solution of a linear equation. In the general case its geometrical interpretation is the ratio of the lengths of the major λₘₐₓ and minor λₘᵢₙ axes of the hyperellipsoid. We define the condition value as: ${c}_{x} = {log}_{10} \left(\frac{{λ}_{max}}{{λ}_{min}}\right)$
where λ are the eigenvalues and c bounds the error relative to *x*. A covariance matrix with a low condition number (cₓ < 6) is termed well-conditioned, while a matrix with a high condition number (cₓ > 6) is termed ill-conditioned. If **P** is rank deficient then λ = 0 and cₓ = 1.

## Claims

1. A method of evaluating the performance of an algorithm, the algorithm being one of a filtering algorithm, an estimation algorithm, and a filtering and estimation algorithm; the method comprising:
performing the algorithm over a time-period (t₁ - t₇) to provide an algorithm output (3, 5) as a function of the time within the time period (t₁ - t₇);
determining, for a plurality of performance metrics, a value of the respective performance metric (104, 204, 304, 404) for the algorithm output as a function of the time within the time period (t₁ - t₇);
determining, for each respective performance metric, a respective performance level (100, 200, 300, 400) as a function of the time within the time period (t₁ - t₇) wherein the respective performance level (100, 200, 300, 400) is a relative level indicative of the performance of the algorithm as a function of the time within the time period (t₁ - t₇) as assessed by the respective performance metric; and
evaluating the performance of the algorithm by comparing the respective performance levels (100, 200, 300, 400) for the respective performance metrics in relation to common timings within the time period (t₁ - t₇).

2. A method of evaluating the performance of an algorithm according to claim 1 wherein evaluating the performance of the algorithm further comprises detecting any performance characteristics that are indicated by a plurality of the performance metrics in relation to common timing within the time period (t₁ - t₇).

3. A method of evaluating the performance of an algorithm according to any of claims 1 or 2, wherein the algorithm performs one of the following: (i) tracking; (ii) simultaneous localisation and mapping.

4. A method of evaluating the performance of an algorithm according to any of claims 1 to 3, wherein one or more of the plurality of performance metrics are selected from the following performance metrics: a normalised innovation squared performance metric, a time-averaged normalised innovation squared performance metric, a filter efficiency check performance metric, a time-averaged normalised innovation autocorrelation performance metric, a nominal filter performance, a normalised estimation error squared performance metric, a Cramér-Rao lower bound, a goodness-of-fit test, a time-averaged goodness-of-fit test, a filter numerical stability performance metric, and a covariance conditioning performance metric.

5. A method of evaluating the performance of an algorithm according to any of claims 1 to 4, further comprising performing a diagnostic process using the determined respective performance levels (100, 200, 300, 400) to determine the causes of any performance characteristics that are indicated by a plurality of the performance metrics.

6. A method of selecting an algorithm, the method comprising:
evaluating the respective performances of a plurality of algorithms using the method of any of claims 1 to 5; and
selecting the algorithm with the best evaluated performance.

7. A method of performing a process that has a plurality of algorithms available for implementing the process, the method comprising:
selecting an algorithm using the method of claim 6; and
implementing the process by using the algorithm output of the selected algorithm.

8. A computer program or plurality of computer programs arranged such that when executed by a computer system it/they cause the computer system to operate in accordance with the method of any of claims 1 to 7.

9. A machine readable storage medium storing a computer program or at least one of the plurality of computer programs according to claim 8.

10. Apparatus for evaluating the performance of an algorithm, the algorithm being one of a filtering algorithm, an estimation algorithm, and a filtering and estimation algorithm; the apparatus comprising one or more processors adapted to:
perform the algorithm over a time-period (t₁ - t₇) to provide an algorithm output (3, 5) as a function of the time within the time period (t₁ - t₇);
determine, for a plurality of performance metrics, a value of the respective performance metric (104, 204, 304, 404) for the algorithm output (3, 5) as a function of the time within the time period (t₁ - t₇);
determine, for each respective performance metric, a respective performance level (100, 200, 300, 400) as a function of the time within the time period (t₁ - t₇) wherein the respective performance level (100, 200, 300, 400) is a relative level indicative of the performance of the algorithm as a function of the time within the time period (t₁ - t₇) as assessed by the respective performance metric; and
evaluate the performance of the algorithm by comparing the respective performance levels (100, 200, 300, 400) for the respective performance metrics in relation to common timings within the time period (t₁ - t₇).

11. Apparatus for evaluating the performance of an algorithm according to claim 10, the one or more processors further adapted to detect any performance characteristics that are indicated by a plurality of the performance metrics in relation to common timing within the time period (t₁ - t₇).

12. Apparatus for evaluating the performance of an algorithm according to any of claims 10 or 11, wherein the algorithm performs one of the following: (i) tracking; (ii) simultaneous localisation and mapping.

13. Apparatus for evaluating the performance of an algorithm according to any of claims 10 to 12, wherein each of the plurality of performance metrics are selected from the following performance metrics: a normalised innovation squared performance metric, a time-averaged normalised innovation squared performance metric, a filter efficiency check performance metric, a time-averaged normalised innovation autocorrelation performance metric, a nominal filter performance, a normalised estimation error squared performance metric, a Cramér-Rao lower bound, a goodness-of-fit test, a time-averaged goodness-of-fit test, a filter numerical stability performance metric, and a covariance conditioning performance metric.

14. Apparatus for evaluating the performance of an algorithm according to any of claims 10 to 13, the one or more processors further adapted to perform a diagnostic process using the determined respective performance levels (100, 200, 300, 400) to determine the causes of any performance characteristics that are indicated by a plurality of the performance metrics.

15. Apparatus for selecting an algorithm, the apparatus comprising:
the apparatus for evaluating the performance of an algorithm according to any of claims 10 to 14 arranged to evaluate the respective performances of a plurality algorithms; wherein
the one or more processors are further adapted to select the algorithm with the best evaluated performance.
